# EUROPÄISCHE PATENTSCHRIFT

(11) **EP 2 076 956 B1**
(45) Veröffentlichungstag und Bekanntmachung des Hinweises auf die Patenterteilung: **21.06.2017**
(21) Anmeldenummer: 07846254.6
(22) Anmeldetag: 12.10.2007
(51) Int. Cl.: H02K 1/20

(54) **KÜHLSYSTEM FÜR HOCHAUSGENUTZTE ROTIERENDE ELEKTRISCHE MASCHINEN**
COOLING SYSTEM FOR HIGHLY UTILIZED ROTATING ELECTRICAL MACHINES
SYSTÈME DE REFROIDISSEMENT POUR MACHINES ÉLECTRIQUES TOURNANTES À HAUT DEGRÉ D'UTILISATION

(30) Priorität: 14.10.2006 DE 102006049188
(43) Veröffentlichungstag der Anmeldung: 08.07.2009
(73) Patentinhaber: Antriebstechnik Katt Hessen GmbH, 34576 Homberg/Efze (DE)
(72) Erfinder: KÖHRING, Pierre, 01309 Dresden (DE)
(74) Vertreter: Drechsler, Gottfried
(86) Internationale Anmeldenummer: PCT/DE2007/001820
(87) Internationale Veröffentlichungsnummer: WO 2008/043354

(56) Entgegenhaltungen:
- EP-A- 0 118 802
- EP-A- 0 155 405
- DE-A1- 2 318 090
- DE-A1- 3 703 594
- DE-A1- 10 054 338
- DE-A1- 10 317 593
- US-A- 3 171 996
- US-A- 4 352 034
- US-A- 4 383 190

## Beschreibung

Die Erfindung betrifft ein Kühlsystem für hochausgenutzte rotierende elektrische Maschinen, insbesondere für Drehstrommaschinen mit Fremd- oder Eigenkühlung mit einem Ständer- und Läuferblechpaket bestehend aus Teilblechpaketen, wobei die Teilblechpakete mit Leiteinrichtungs- und Abstandshaltersegmenten voreinander beabstandet sind und die wahlweise sowohl gehäuselos oder mit Maschinengehäuse ausgeführt werden können.

Für bestimmte spezielle Anwendungsfälle, wie z. B. für Motorenprüfstände werden sehr hochdynamische Antriebe benötigt. Solcherart hochdynamische rotierende elektrische Maschinen sind elektrisch hochausgenutzte und zudem trägheitsarme Elektromotoren, die auf Grund der realisierten hohen Leistungsdichte sich besonders schnell und intensiv erwärmen können. Hochausgenutzte rotierende elektrische Maschinen erfordern zudem einen Läufer mit möglichst geringem Durchmesser, der sich nur bedingt gut kühlen lässt. Deshalb ist es besonders wichtig, dass die aus dem Ständer stammende Wärme nicht noch zur Erwärmung des Läufers beiträgt. Die Realisierung einer solchen Maschinenausführung bedingt neben einer intensiven Kühlung des Läuferblechpaketes deshalb insbesondere eine optimale Kühlung des Ständerblechpaketes.

Es ist allgemein bekannt, dass eine intensive Luftkühlung des Läufer- und des Ständerblechpaketes mit Hilfe von axialen Kühlkanälen oder auch mit axialen und radialen Kühlkanälen erreicht werden kann. Dabei sind die Ständer- und Läuferblechpakete in der Regel aus mehreren Teilblechpaketen aufgebaut. Luftgekühlte Ausführungen sind in der EP 0 522 210 A1, der EP 0 118 802 A1 und der DE 43 20 559 A1 dargestellt. Diese Ausführungen haben allerdings den Nachteil, dass die axialen Kühlkanäle innerhalb des Läufers axiale Strömungsquerschnitte benötigen, die einer Verkleinerung des Läuferdurchmessers entgegenstehen.

In der DE 38 08 986 C2 wird eine Asynchronmaschine mit Luftkühlung beschrieben, wo sowohl das Ständer- als auch das Läuferblechpaket aus einzelnen Teilblechpaketen aufgebaut ist. Durch die axialen Kühlkanäle im Inneren des Läufers wird der maximal erreichbare kleinste Durchmesser des Läufers begrenzt. Zudem kommt es in der Maschine bei dieser Kühlungsausführung zu einer ungleichmäßigen Temperaturverteilung.

Eine weitere mögliche Lösung für eine intensive Kühlung einer hochausgenutzten rotierenden elektrischen Maschine besteht in der Anwendung der Flüssigkeitskühlung entsprechend EP 0 824 287 A1. Diese Lösung ist sehr aufwendig und kostenintensiv, weil komplizierte Dichtungselemente für die Realisierung der Flüssigkeitskühlung im rotierenden Läufer eingesetzt werden müssen. Zudem ist es allgemein anerkannt, dass jede Art von Flüssigkeitskühlung konstruktiv aufwendiger und kostenintensiver ist als eine Luftkühlung.

In einer anderen Schrift, der DE 198 24 202 C1, wird eine weitere aus Teilblechpaketen im Ständer und Läufer bestehende Maschine mit Flüssigkeitskühlung vorgeschlagen. Der wesentlichste Nachteil dieser Lösung ist allerdings darin zu sehen, dass diese Kühlungsart nur in der konventionellen Einbaulage geeignet ist, ihre Wirkung zu entfalten. Zudem führt diese vorgeschlagene Lösung zu einer ungleichmäßigen Kühlung über den Umfang des Läufer- und Ständerblechpaketes betrachtet. Problematisch ist insbesondere die Kühlung des sich drehenden Läufers, da die Flüssigkeit durch die Zentrifugalwirkung nach außen geschleudert wird. Zudem ist die hier beschriebene Ölkühlung weiter trägheitserhöhend.

In der DE 10 2004 013 133 A1 ist eine rotierende elektrische Maschine mit einem Maschinengehäuse und einem zylinderförmigen Blechpaket beschrieben, wo auch im Ständerblechpaket Kühlkanäle in axialer Richtung angeordnet sind und wobei auch eine über dem Umfang des Maschinengehäuses verteilte Kühlluftöffnung in der axialen Mitte des Maschinengehäuses angeordnet ist. Diese kann wahlweise zu einer mittigen Kühlluftabfuhr oder entgegengesetzt auch zu einer Kühlluftzufuhr benutzt werden. Eine intensive Kühlung sowohl des Ständerblechpaketes als auch des Läuferblechpaketes kann mit dieser Ausführung nicht erreicht werden. Hier wird lediglich eine Art verbesserte Oberflächenkühlung des Ständerblechpaketes beschrieben.

Ein intensives Kühlsystem für trägheitsarme rotierende elektrische Maschinen insbesondere für Drehstrommaschinen mit Fremd- oder Eigenkühlung ist in der DE 100 54 338 C2 aufgezeigt. Dabei ist sowohl das Läufer- als auch das quadratische Ständerblechpaket jeweils aus mehren Teilblechpaketen aufgebaut. An der Außenkontur eines quadratischen Ständerblechpaketes schließen sich nach außen über die gesamte Länge axial einseitig verschlossene Zu- und Abströmkammern über den Radius verteilt mit etwa gleichem axialen Querschnitt an. Von einer Zuströmkammer führen radiale Kühlkanäle, die durch die Endbleche der Ständerteilblechpakete axial und durch Leiteinrichtungs- und Abstandshaltersegmente im Rückengebiet des Ständerblechpaketes radial begrenzt sind. Im Nutgebiet des Ständerblechpaketes stellt die Wicklung mit der Nutisolation die radiale Begrenzung dar. Im Bereich der Zähne der Ständerteilblechpakete kann die Kühlluft bis auf und in den Läufer strömen. Die Luft wird durch die Rotation des Läufers zusätzlich verwirbelt, so dass eine intensive Kühlung erreicht wird. Die erwärmte Luft wird in die radialen abströmend ausgeführten Kühlkanäle des Ständerblechpaketes gedrückt. Diese Kühlkanäle sind in gleicher Art und Weise wie die Kühlkanäle, durch die Luft einströmt, ausgebildet und sind mit den Abströmkammern verbunden. Dabei kühlt diese Luft das Ständerblechpaket intensiv. In den Abströmkammern wird die Kühlluft dabei umgelenkt und strömt durch Öffnungen im Pressrahmen aus dem quadratischen Ständerblechpaket in den Wickelkopfraum und kühlt unter anderem zusätzlich noch die Wickelköpfe dieser rotierenden elektrischen Maschine. Allerdings beinhaltet diese technische Lösung einen relativ aufwendigen Blechschnitt. Zudem werden die magnetisch nicht aktiven aber thermisch empfindlichen Konstruktionsteile, wie insbesondere die Maschinenlager, zusätzlich erwärmt.

Eine andere Lösung, in der sich auf dem Radius eines Ständerblechpaketes im Gehäuse einer rotierenden elektrischen Maschine verteilt Abschnitte für die Zufuhr und Abfuhr des Kühlgases einander abwechseln, ist in der DE 23 18 090 B2 beschrieben. Dabei werden allerdings die axialen Zuführkanäle zur Kühlluftzufuhr aus einem System von gegenüber dem Ständerblechpaketrücken beabstandeten Rohren gebildet. Diese Rohre enden in geschlossenen Kammern, d. h. diese Kammern sind nach außerhalb des Ständerblechpaketes geschlossen ausgebildet. Nach innen sind die Kammern mit radialen Kühlschlitzen verbunden, die durch die Aufteilung des Ständerblechpakets in einzelne Teilblechpakete gebildet werden. Diese technische Ausführung erzeugt zwar eine gleichmäßige Temperaturverteilung im gesamten Ständerblechpaket, ist aber konstruktiv sehr aufwendig und deshalb kostenintensiv. Zusätzlich wird die Kühlluft ebenfalls zur Wicklungskopfkühlung und zur Lagerkühlung mit genutzt.

In der EP 155 405 A1 ist eine gasgekühlte Ständerwicklung für eine dynamoelektrische Maschine beschrieben, bei der die Kühlmediumführung sowohl axiale als auch radiale Kühlmediumströmungen im Inneren des Ständerblechpaketes erzeugt b. Allerdings handelt e sich um eine indirekte Kühlung und diese ist nur für große Turbogeneratoren geeignet. Der Erfindung liegt die Aufgabe zugrunde, ein intensives Kühlsystem für hochausgenutzte trägheitsarme rotierende elektrische Maschinen, insbesondere für Drehstrommaschinen mit Fremd- und Eigenkühlung zu schaffen, das das erwärmte Kühlmedium so schnell als möglich aus der Maschine abführt eine konstante Temperaturverteilung über die gesamte Länge des Ständerblechpakets gewährleistet und wobei die magnetisch nicht aktiven aber thermisch empfindlichen Konstruktionsteile, wie insbesondere die Maschinenlager nicht zusätzlich erwärmt werden.

Die Aufgabe der Erfindung wird durch die Merkmale des 1. Patentanspruchs gelöst. Weitere zweckmäßige Ausgestaltungen der Erfindung sind Gegenstand der rückbezüglichen Unteransprüche. Anspruch 1 beschreibt die allgemeine erfinderische Lösung für ein Kühlsystem für hochausgenutzte rotierende elektrische Maschinen mit oder/ohne Maschinengehäuse. Diese Ausführung ist sowohl mit Fremd- oder Eigenkühlung, insbesondere für Drehstrommaschinen mit einem Ständer- und Läuferblechpaket bestehend aus Teilblechpaketen realisierbar. Die Teilblechpakete sind, wie bekannt, mit Leiteinrichtungs- und Abstandshaltersegmenten voneinander beabstandet angeordnet, so dass zwischen zwei nebeneinander angeordneten Teilblechpaketen ein radialer Spalt entsteht durch den das jeweils eingesetzte Kühlmedium strömen kann. Des weiteren sind wie an sich von quadratischen Ständerblechpaketen bekannt, im Rücken am Außendurchmesser des Ständerblechpaketes 1 über seine gesamte Länge axiale Zuströmkanäle 2 und axiale Abströmkanäle 3 über den Radius verteilt mit etwa gleichem axialen Querschnitt angeordnet. Neuartig ist, dass die axialen Zuströmkanäle 2 beidseitig offen ausgebildet sind während die Abströmkanäle 3 beidseitig verschlossen ausgeführt sind. In der bevorzugten Ausführung entspricht ein Zuströmkanal 2 und ein Abströmkanal jeweils einer Nut- oder Zahnteilung der betreffenden rotierenden elektrischen Maschine. Erfindungsgemäß sind in diesem Zusammenhang im Bereich des Rückens des Ständerblechpaketes 1 zwischen dem einem oder den jeweils mehreren nebeneinander angeordneten Ständerteilblechpaketen mit geschlossenen Kanälen 7 und dem sich davon unterscheiden, den anders ausgebildeten Ständerteilblechpaket mit geschlossenen und offenen Kanälen 8 in radialer Richtung am Umfang nach außen geschlossene Leiteinrichtungs- und Abstandshaltersegmente mit Stegen 4 angeordnet. Die Anzahl der nach innen gerichteten Stege der Leiteinrichtungs- und Abstandshaltersegmente 4 ist entsprechend der Anzahl der Zuströmkanäle 2 und Abströmkanäle 3 ausgebildet, die wahlweise als nach innen gerichtete breite keilförmige Stege 4.1 oder als lange schmale Stege 4.2 ausgebildet sein können. Das oder die einzelnen Ständerteilblechpakete mit geschlossenen Kanälen 7 sind aus einer Anzahl gleich geformter Einzelbleche mit geschlossenen Kanalabschnitten 5 gesetzt. Sind mehrere gleichartige Ständerteilblechpakete mit geschlossenen Kanälen 7 nebeneinander jeweils getrennt durch die Leiteinrichtungs- und Abstandshaltersegmente mit Stegen 4 angeordnet, sind diese so nebeneinander gesetzt und kombiniert, dass jeweils die geschlossene Kanalabschnitte fortlaufend Zuströmkanäle 2 und Abströmkanäle 3 bilden. Zur Maschinenmitte hin ist bei dem erfindungsgemäßen intensiven Kühlsystem für hochausgenutzte rotierende elektrische Maschinen mindestens ein Ständerteilblechpaket mit offenen und geschlossenen Kanälen 8, das aus sternförmigen Einzelblechen mit offenen und geschlossenen Kanalabschnitten 6 gesetzt ist, angeordnet. Bei Gehäuseausführung des Kühlsystems sind im Gehäuse 13 an den Stellen des Ständerteilblechpaketes 1, wo sich die offenen Kanäle befinden, radiale Gehäuseausströmöffnungen 16 angeordnet. Das erfindungsgemäße Kühlsystem für hochausgenutzte rotierende elektrische Maschinen ermöglicht eine intensive Kühlung vor allem in den Bereichen der elektrischen Maschine, wo die Wärme entsteht. Es erfolgt eine unmittelbare Kühlung der Wicklung im Bereich der radialen Kühlbereiche 22, wo die Wicklung umströmt wird, bis einschließlich in das elektromagnetisch hochbelastete Läuferblechpaket hinein. Durch die erfindungsgemäße Anordnung kann in jedem radialen Kühlbereich 22 kühles kaum erwärmtes Kühlmedium zur Wicklung zugeführt werden, diese frei liegenden Wicklungen umspülen, in die radialen Zwischenräume des aus Teilblechpaketen bestehenden Läuferblechpakets eindringen, damit den gesamten Läufer mit kühlen und strömt dann wieder im gleichen radialen Kühlbereich 22, je nach Ausführungsform um eine Nut- oder Zahnteilung versetzt, in Richtung des Rückenbereichs des Ständerblechpaketes 1 bis in den Abströmkanal 3, wo das Kühlmedium umgelenkt wird und über die offenen Kanäle der Ständerteilblechpakete mit offenen und geschlossenen Kühlkanäle 8 abgeführt wird. Dadurch entsteht eine sehr konstante gleichmäßige Temperaturverteilung über die gesamte Länge des Ständerblechpakets 1. Es gibt bei dem erfindungsgemäßen Kühlsystem sowohl im Ständerblechpaket 1 als auch im Läuferblechpaket keine Wärmenester mehr. Das erwärmte Kühlmedium wird aus den kritischen Bereichen über kurze direkt Wege (im Vergleich zum bekannten Stand der Technik cirka halbe Wege) über die offenen Kanäle des bzw. der Ständerteilblechpakete mit offenen und geschlossenen Kanälen 8 abgeführt. Die magnetisch nicht aktiven aber thermisch empfindlichen Konstruktionsteile, wie insbesondere die Maschinenlager der rotierenden elektrischen Maschine werden nicht von einem erwärmten Kühlmedium um- oder durchströmt. Diese werden ebenfalls mit frischen kühlen Kühlmedium beaufschlagt und deshalb nicht zusätzlich erwärmt. Gerade die Maschinenlager sind bei hochausgenutzten rotierenden elektrischen Maschinen erhöhten Belastungen unterworfen und bedürfen einer ebenfalls intensiven Kühlung. Zudem besteht bei konventioneller Fremdkühlung durch die erhöhte Druckdifferenz zwischen Stirnraum und Umgebung die Gefahr, dass es zum Fettaustrag aus den Maschinelagern kommen kann. Beim erfindungsgemäßen Kühlsystem lässt sich innerhalb des Ständer- und Läuferblechpaketes dagegen eine nahezu beliebige Druckdifferenz innerhalb der Maschine aufbauen, was zu einer sehr effektiven Kühlung führt. Zudem kann die Temperatur des Kühlmediums erheblich gesteigert werden. Die Ausführung einer rotierenden elektrischen Maschine mit dem erfindungsgemäßen Kühlsystem führt zu einer Erhöhung des Drehmoments um cirka. 30 % und zu einer möglichen Reduzierung des Läuferdurchmessers um bis zu 13 %, was letztlich eine Reduzierung des Motorträgheitsmoments um 43 % bewirkt (bezogen auf die technische Lösung gemäß DE 100 54 338 C2.

In einer vorteilhaften Ausführung des erfindungsgemäßen Kühlsystems für hochausgenutzte rotierende elektrische Maschinen ist bei gegeneinander um einen Zuströmkanal 2 und Abströmkanal 3 verdrehter Anordnung zweier hintereinanderfolgender Ständerteilblechpakete mit offenen und geschlossenen Kanälen 8 ein Zwischenwandelement 9 angeordnet. Dadurch kann das kühle, zuströmende Kühlmedium nicht sofort in einen im nächsten Teilblechpaket ausgebildeten Abströmkanal strömen, sondern wird gezwungen in den radial daneben liegenden Abströmkanal über den Umweg der radialen Kühlbereiche 22 zwischen den Teilblechpaketen zu strömen.

In einer weiter spezialisierten Ausführung des Kühlsystems ist das Zwischenwandelement 9 durchgehend geschlossen als ein kreisförmiges Blech ausgebildet. Es besitzt dabei einen gleichen oder größeren Durchmesser, wie das Ständerblechpaket 1 und ist zwischen zwei gegeneinander versetzt angeordneten Ständerteilblechpaketen mit offenen und geschlossenen Kanälen 8 angeordnet. Zwischen beiden Ständerteilblechpaketen mit offenen und geschlossenen Kanälen 8 ist dabei vorteilhafterweise kein Leiteinrichtungs- und Abstandshaltersegment mit Stegen 4 angeordnet. Es kann allerdings auch für spezielle Ausführungen sinnvoll sein, jeweils links und rechts des Zwischenwandelements 9 mindestens je ein Leiteinrichtungs- und Abstandshaltersegment mit Stegen 4 anzuordnen.

Besonders vorteilhaft für das erfindungsgemäße Kühlsystem ist es, wenn das Zwischenwandelement 9 genau in der Mitte der rotierenden elektrischen Maschine zwischen einem Ständerteilblechpaket mit geschlossenen Kanälen 7 und einem Ständerteilblechpaket mit offenen und geschlossenen Kanälen 8 oder zwischen zwei gleichen Ständerteilblechpaketen mit offenen und geschlossenen Kanälen 8 angeordnet ist. Dabei lassen sich besonders kurze Kühlmediumströmungswege realisieren und die elektrische Maschine kann symmetrisch bzw. spiegelsymmetrisch ausgeführt werden. Es entstehen in diesem Fall zwei unabhängig voneinander wirkende symmetrische Kühlsysteme mit besonders guter Wärmeabführung nicht nur aus dem Ständer, sondern auch aus dem hochbelasteten Läufer der hochausgenutzten rotierenden elektrischen Maschine.

Die erfindungsgemäß angeordneten nach innen gerichteten Stege des Leiteinrichtungs- und Abstandshaltersegments 4 können als breite keilförmige Stege 4.1 ausgebildet sein, die sich dann bis in die Nutbereiche zwischen die Ständerteilblechpakete 7, 8 erstrecken und nahezu auf der Isolation der Wicklung 10 aufliegen, d. h. sie enden am Nutgrund. Der Abstand von der Wicklung kann dabei minimal 0,1mm sein.

Auch eine Ausbildung der Leiteinrichtungs- und Abstandshaltersegmente 4 mit den nach innen gerichteten Stegen als lange schmale Stege 4.2 kann ausgebildet sein. Die langen schmalen Stege erstrecken sich in diesem Fall bis in die Bereiche der Zähne des Ständerblechpaketes 25 bis unmittelbar an den Luftspalt 26, d. h. sie erstrecken sich über die gesamte Länge eines Zahns. Die Breite der Stege ist dabei erheblich geringer als die Zahnbreite. Hierbei werden die frei liegenden Wicklungsabschnitte in den radialen Kühlbereichen 22 zwischen einzelnen Ständerteilblechpaketen 7 und 7 und/oder 7 und 8 besser umströmt. Allerdings erhöht sich bei dieser Ausführung der Strömungswiderstand innerhalb des Ständerblechpaketes 1 da der Querschnitt der Wicklung mit ihrer Isolation voll angeströmt wird.

Es ist auch eine Ausführung des erfindungsgemäßen Kühlsystems denkbar, bei dem jeweils ein Zuströmkanal 2 oder mehrere Zuströmkanäle 2 nebeneinander in Umfangsrichtung und anschließend ein Abströmkanal 3 oder mehrere Abströmkanäle 3 nebeneinander in Umfangsrichtung, die jeweils mehrere Nut- oder Zahnteilungen umfassen, angeordnet sind. So kann ein Zuströmkanal z. B. über 2, 3, oder 4 Nutteilungen oder Zahnteilungen ausgeführt sein. Gleiches ist auch für die Abströmkanäle 3 ausführbar. Eine günstige Kombination liegt vor, wenn die Abströmkanäle 3 eine Nut oder Zahnteilung mehr umfassen als die Zuströmkanäle 2. Diese Ausführung ist zwar weniger aufwendig ist aber mit einer leichten Verschlechterung der Kühlwirkung verbunden.

Vorteilhafterweise sind die Abströmkanäle 3 im Ständerteilblechpaket 1 beim Kühlsystem für hochausgenutzte rotierende elektrische Maschinen mit einem an diesen Stellen verschlossen ausgeführten Endblech 27 gegenüber dem Wicklungskopfraum 12 verschlossen. Diese Ausführung ist am einfachsten zu fertigen. Es können aber genauso einfache Abdeckbleche an den Kanalenden der Abströmkanäle 3 angeordnet und mittels geeigneter Befestigungsmethoden befestigt werden.

Von besonderem Vorteil ist es, wenn die Leiteinrichtungs- und Abstandshaltersegmente mit Stegen 4, bzw. die breiten keilförmigen Stege 4.1 oder die langen schmalen Stege 4.2 beim Kühlsystem in den Zwischenräumen zwischen den Ständerteilblechpaketen mit geschlossenen und offenen Kanälen 7 und 8 aus einem oder mehreren gestanzten Distanzblechen oder aus einem breiteren Formteil bestehen. In der Regel ist es ausreichend, wenn der Zwischenraum zwischen den Ständerteilblechpaketen mit offenen und geschlossenen Kanälen 7 und 8, d. h. die Länge der radialen Kühlbereiche 22 lediglich 8 mm beträgt.

Ist das erfindungsgemäße Kühlsystem für hochausgenutzte rotierende elektrische Maschinen mit einer Fremdkühlung ausgestattet ist es vorteilhaft, wenn die Fremdkühlung durch einen gesondert angeordneten Lüfterbaustein erfolgt, der entweder axial, oder auch radial seitlich, oder entsprechend radial oben angeordnet ist. Hierbei kann die Anordnung von den jeweils geplanten Einsatzort und dessen Platzverhältnissen wahlweise bestimmt werden.

Es ist auch denkbar, bei Fremdkühlung das erfindungsgemäße Kühlsystem in eine Kaskade von mehrere einzeln unabhängig voneinander wirkende Teilkühlsysteme zu unterteilen. Dabei kann die Fremdkühlung z. B in einer einfachen Ausführung jeweils an den beiden Enden der Teilkühlsysteme angeordnet sein. Auch eine Ausführung von mehrfach radial angeordneten Lüfterbausteinen verteilt über die Länge des Ständerblechpakets 1 ist denkbar. Das Kühlmedium wird dabei über die offenen Kanäle eines Ständerteilblechpaketes mit offenen und geschlossenen Kanälen 8 zugeführt und wiederum über die offenen Kanäle eines Ständerteilblechpaketes mit offenen und geschlossenen Kanälen 8 abgeführt. Diese beiden Ständerteilblechpakete 8 sind jeweils gegeneinander verdreht genau um einen Kanalquerschnitt versetzt angeordnet. So kann dann das Ständerblechpaket nur in einer speziellen Variante aus gegeneinander versetzt angeordneten Ständerteilblechpaketen mit offenen und geschlossenen Kanälen 8 aufgebaut sein. Nach jeweils zwei Teilblechpaketen ist dann eine Trennwand 9 angeordnet. Sinnvoll ist die Ausführung aber mit zwei Ständerteilblechpaketen mit offenen und geschlossenen Kanälen 8 und einem dazwischen angeordneten Ständerteilblechpaket mit geschlossenen Kanälen 7. Hier bilden immer drei aufeinanderfolgend angeordnete Ständerteilblechpakete 7, 8 und 7 einen Teilkühlsystem.

In einer speziellen Ausführung der Leiteinrichtungs- und Abstandshaltersegmente mit Stegen 4 innerhalb des erfindungsgemäßen Kühlsystems für hochausgenutzte rotierende elektrische Maschinen sind die Leiteinrichtungs- und Abstandshaltersegmente mit breiten keilförmigen Stegen 4.1 oder die Leiteinrichtungs- und Abstandshaltersegmente mit schmalen langen Stegen 4.2 im Raum zwischen den Ständerteilblechpaketen mit geschlossenen und offenen Kanälen 7, 8 so ausgeführt, dass sich der freie durchströmbare Querschnitt der radialen Kühlbereiche 22 radial nach innen verkleinert. Dadurch verbessert sich das Strömungsverhalten innerhalb der radialen Kühlbereiche 22.

Beim erfindungsgemäßen Kühlsystem ist es auch denkbar, dass der axiale Querschnitt der Zuströmkanäle 2 und Abströmkanäle 3 aus strömungstechnischen Gründen unterschiedlich groß ausgebildet ist.

In einer besonders vorteilhaften Ausführung des Kühlsystems sind an den Zuströmkanälen 2 axial beidseitig Lüfter angeordnet, die über die axialen Gehäuseöffnungen das Kühlmedium zuführen. Die Abströmkanäle 3 sind beidseitig axial verschlossen. In der Maschinenmitte, symmetrisch gegenüber dem Wicklungskopfraum 12 betrachtet, sind ein oder zwei Ständerteilblechpakete mit offenen und geschlossenen Kanälen 8 angeordnet. Über die offenen Kanäle des bzw. der zwei Ständerteilblechpakete mit offenen und geschlossenen Kanälen 8, bzw. bei Ausführung der rotierenden elektrischen Maschine mit einem Gehäuse, über die im Gehäusemantel angeordneten radialen Gehäuseabströmöffnungen 16, die ebenfalls mittig symmetrisch im Gehäuse 13 angeordnet sind, erfolgt eine zentrische Abführung des Kühlmediums aus dem Ständerblechpaket 1. Bei dieser Ausführung kann über die gesamte Länge des Ständerblechpaketes 1 über die radialen Kühlbereiche 22 gleichmäßig temperiertes kühles Kühlmedium bis in das Läuferblechpaket eingebracht werden.

Weiterhin ist es denkbar, dass die Zuströmkanäle 2 und die Abströmkanäle 3 im Querschnitt unterschiedlich groß ausgebildet sind. Dabei sind die zugehörigen Leiteinrichtungs- und Abstandshaltersegmente mit Stegen 4 so ausgebildet, dass die radialen Zuströmkanäle 2, durch die das Kühlmedium zuströmt, sich über eine gleiche oder andere Zahl von mehreren Nut- oder Zahnteilungen erstrecken, als die radialen Abströmkanäle 3, durch die das Kühlmedium abströmt.

Es ist auch eine Ausführung des erfindungsgemäßen Kühlsystems für hochausgenutzte rotierende elektrische Maschinen möglich, wobei sich die Zuströmkanäle 2 im Ständerblechpaket 1 im Strömungsrichtung gesehen konisch und/oder treppenförmig verjüngen und die Abströmkanäle 3 im Ständerblechpaket 1 in Strömungsrichtung gesehen sich konisch und/oder treppenförmig erweitern. Hier wird innerhalb des Ständerblechpaketes 1 die kühltechnisch wirksame Oberfläche vergrößert, wobei sich die Wärmeabfuhr aus dem Ständerblechpaket 1 verbessern lässt, da es möglich ist den axialen Strömungswiderstand zu optimieren.

Zur weiteren Vergrößerung des Kühlmitteldurchsatzes kann es bei drückender Belüftung auch sinnvoll sein, beim erfindungsgemäßen Kühlsystem an den offen Kanälen der sternförmigen Ständerteilblechpakete 8 bzw. bei Gehäuseausführung an den Gehäuseabströmöffnungen 16 über den offenen Kanälen der Ständerteilblechpakete mit offenen und geschlossenen Kanälen 8 zusätzlich einen saugenden Lüfter anzuordnen. Auch eine Ausführung des Kühlsystems für hochausgenutzte rotierende elektrische Maschinen, wo an den offen Kanälen der sternförmigen Ständerteilblechpakete 8 bzw. bei Gehäuseausführung an den Gehäuseabströmöffnungen 16 nur ein saugender Lüfter angeordnet ist, kann ausgeführt werden.

Die Erfindung soll nachstehend an Hand der Figuren 1 bis 4 in einem Ausführungsbeispiel näher erläutert werden. Dabei zeigt
- Fig. 1: schematisch den Strömungsverlauf des Kühlmediums über einen Einströmkanal 2 und zwei Abströmkanäle 3 und den Strömungsverlauf in den Bereichen eines radialen Kühlbereiches 22 bei einer bevorzugten spiegelsymmetrischen Ausführung eines erfindungsgemäßen Kühlsystems;
- Fig. 2: schematisch den Strömungsverlauf des Kühlmediums über drei Einströmkanale 2 und zwei Abströmkanäle 3 bei einer möglichen Ausführung eines erfindungsgemäßen Teilkühlsystems für eine Kaskadenanordnung;
- Fig. 3: einen Längsschnitt durch eine hochausgenutzte rotierende elektrische Maschine mit einem erfindungsgemäßen Kühlsystem in symmetrischer Anordnung;
- Fig. 4: einen Querschnitt in mehreren Ebenen durch die Ständerteilblechpakete 7 und 8 und einen Läufer 21;

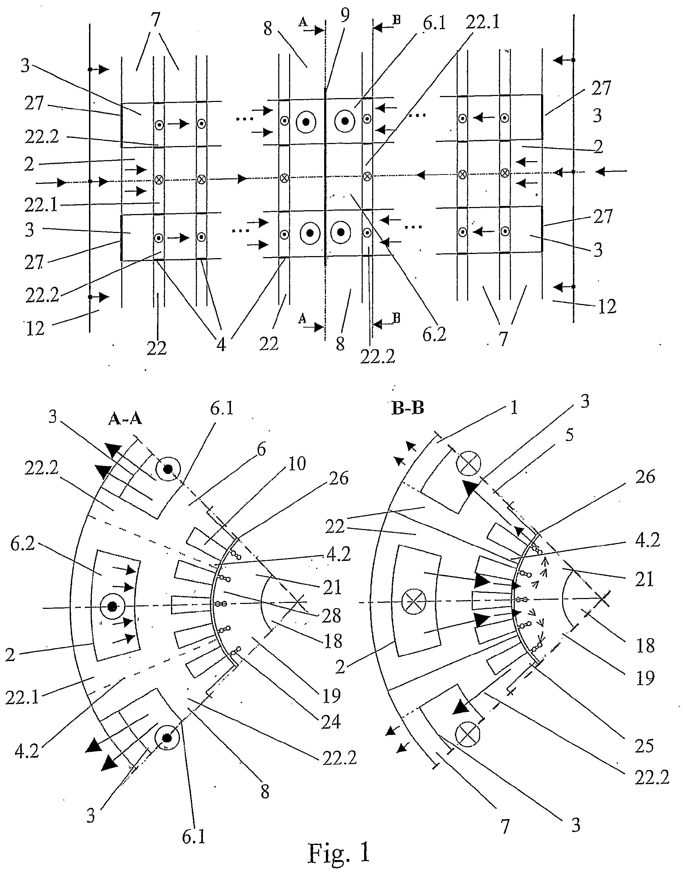

In Figur 1 ist der Strömungsverlauf des Kühlmediums bei einer bevorzugten Ausführung eines erfindungsgemäßen Kühlsystems bei symmetrischer Aufteilung des Kühlsystems in zwei spiegelsymmetrische Teilkühlsysteme schematisch gezeigt. Das Kühlmedium strömt von den beiden axialen Seiten der rotierenden elektrischen Maschine axial in den Zuströmkanal 2 mit erhöhtem Druck ein. Bereits nach den ersten jeweils außen liegenden Ständerteilblechpaketen mit nur geschlossenen Kanälen 7 (einer wirkt als Zuströmkanal 2 und der jeweils nächste wirkt als Abströmkanal) wird ein Teil des Kühlmediums in das Innere der elektrischen Maschine im Bereich des radialen Kühlbereichs des Zuströmkanals 22.1 umgelenkt. Jeweils an jedem weiteren radialen Kühlbereich des Zuströmkanals 21.1 wird ein Teil des zugeführten Kühlmediums umgelenkt. Der letzte Teilstrom wird zwischen dem letzten Ständerteilblechpaket mit geschlossenen Kanälen 7 und dem Ständerteilblechpaket mit geschlossenen und offenen Kanälen 8 nach Innen umgelenkt. Zwischen den beiden innen angeordneten Ständerteilblechpaketen mit geschlossenen und offenen Kanälen 8 ist ein durchgehend geschlossenes Zwischenwandelement 9 bevorzugt aus einem Elektroblech angeordnet. Es ist allerdings auch möglich, bei einer spiegelsymmetrischen Anordnung des erfindungsgemäßen Kühlsystems, das Zwischenwandelement 9 wegzulassen. Da die Zuführung des Kühlmediums von beiden Seiten gleichmäßig mit gleichem Druck erfolgt, laufen die Ströme im Inneren der Maschine gegeneinander und es tritt letztlich die gleiche Wirkung in der Maschinenmitte ein, wie bei der Ausführung mit Zwischenwandelement 9. In Figur 1 sind des weiteren zwei benachbarte Abströmkanäle 3 mit dem Strömungsverlauf des aus dem Maschineninneren abströmenden erwärmten Kühlmediums gezeigt. Die Abströmkanäle 3 (hier sind nur die beiden benachbarten Abströmkanäle gezeigt) sind jeweils axial außen gegenüber den beiden Wicklungskopfräumen 12 mit Endblechen 27 dicht verschlossen. Über die radialen Kühlbereiche der Abströmkanäle 22.2 strömt das sich im Inneren der elektrischen Maschine erwärmte Kühlmedium radial nach außen und wird in den geschlossenen Kanälen der Ständerteilblechpakete in Richtung der Maschinenmitte umgelenkt, da die Abströmkanäle in Richtung der Wickelkopfräume 12 axial dicht verschlossen sind. Der Gesamtstrom des erwärmten Kühlmediums ergibt sich aus den einzelnen Teilströmen, die über die jeweiligen radialen Kühlbereiche der Abströmkanäle 22.2 in die axialen Abströmkanäle strömen. In der Maschinenmitte ist je ein Ständerteilblechpaket 8 am Ende des Teilkühlsystems mit geschlossenen (gleich Zuströmkanal 2) und offenen Kanal (gleich Abströmkanal 3 nach außen) angeordnet, d. h. der geschlossene Kanal des Ständerteilblechpaketes 7 trifft auf einen offenen Kanal des Ständerteilblechpaketes 8. In diesem mittleren Bereich kann das erwärmte Kühlmedium die rotierende elektrische Maschine radial verlassen. Bei dieser erfindungsgemäßen Anordnung der beidseitig offenen Zuströmkammern 2 und der beidseitig verschlossenen Abströmkammern 3 wird über die gesamte Länge des Ständerblechpaketes 1 kaltes Kühlmedium zugeführt. Die Zuströmwege und die Abströmwege des Kühlmediums sind bei dieser Ausführung in zwei spiegelsymmetrische Teilkühlsysteme sehr kurz und garantieren einen hohen Wärmeaustrag aus allen Teilen der rotierenden elektrischen Maschine. Dadurch entsteht eine besonders konstante gleichmäßige Temperaturverteilung über die gesamte Länge dieser hochausgenutzten elektrischen Maschine.

In Figur 1 ist im Schnitt A-A die Draufsicht auf ein erfindungsgemäßes Ständerteilblechpaket mit offenen und geschlossenen Kanälen 8 einschließlich des Strömungsverlaufes des Kühlmediums gezeigt. Dieses neuartige erfindungsgemäße Ständerteilblechpaket 8 ist aus einer bestimmten Anzahl von sternförmigen Einzelblechen mit offenen und geschlossenen Kanalabschnitten 6 gesetzt. So entstehen jeweils über einem Radius verteilt die geschlossenen Kanalabschnitte 6.2 für den Zuströmkanal 2 und die offenen Kanalabschnitte 6.1 für den Kühlmediumaustritt aus dem Abströmkanal 3. Die Unterteilung der radialen Kühlbereiche 22 zwischen den einzelnen Ständerteilblechpaketen 7 und 8 in radiale Kühlbereiche der Zuströmkanäle 22.1 und radiale Kühlbereiche der Abströmkanäle 22.2 durch die Leiteinrichtungs- und Abstandshaltersegmente mit den die Trennung bildenden langen schmalen Stegen 4.2 sind hier nur als gestrichelte Linien (da verdeckt) abgebildet und erstrecken sich bis zum Ende eines Zahnes 25 des Ständerblechpaketes, h. h. bis an den Luftspalt 24 heran. Die Pfeilrichtung zeigt die Strömungsrichtung des Kühlmediums in den einzelnen radialen Kühlbereichen 22.1 und 22.2. Im Schnitt A-A ist ein Querschnitt durch diese hochausgenutzte elektrische Maschine gezeigt. Die nach Innen umgelenkte Teilströmung des Kühlmediums im radialen Kühlbereich des Zuströmkanals 22.1 durchströmt die Ständerwicklung 10, durch den Luftspalt 26 und dann in die radialen Zwischenbereiche 28 zwischen die Läuferteilblechpakete 20 bis hinein auf die Läuferwelle 18. Dabei werden auch die Wicklungsstäbe der Läuferwicklung 24, die in den radialen Zwischenbereichen 28 frei liegen umströmt und gekühlt. Gleichzeitig erfolgt ein Wärmeübergang aus dem warmen Läuferblech 21 auf das Kühlmedium. Voraussetzung ist dabei, dass das Läuferblechpaket 19 sich ebenfalls aus einzelnen Läuferteilblechpaketen 20 in gleicher Länge wie die Ständerteilblechpakete 7, 8 zusammensetzt. Die Luft wird durch die Rotation des Läufers zusätzlich verwirbelt, so dass eine intensive Kühlung im elektromagnetisch hochausgenutzten Läufer erreicht wird. Dies ist anschaulich aus der Zeichnung gemäß Schnitt B-B ersichtlich. Das erwärmte Kühlmedium wird anschließend aus den radialen Zwischenbereichen 28 des Läuferblechpaketes 19 durch den Luftspalt 26 zwischen der Ständerwicklung in die radialen Kühlbereiche der Abströmkanäle 22.2 gedrückt, die in die Abströmkanäle 3 münden. Das Kühlmedium wird im geschlossenen Abströmkanal 3 umgelenkt und strömt über den offenen Kanalabschnitt 6 des Ständerteilblechpaketes 8 in der Mitte der hochausgenutzten rotierenden elektrischen Maschine aus. Diese Teilbereiche der radialen Kühlbereiche der Zuströmkanäle 22.1, durch die die Teilströme des Kühlmediums einströmen, sind in gleicher Art und Weise wie die Teilbereiche der radialen Kühlbereiche der Abströmkanäle 22.2, durch die die Teilströme des Kühlmedium ausströmen, im gezeigten symmetrischen Ausführungsbeispiel ausgebildet.

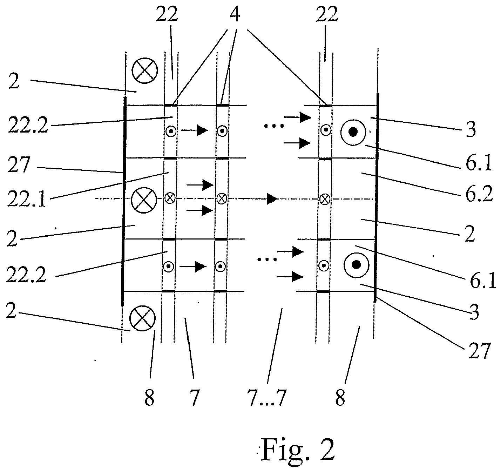

Figur 2 zeigt schematisch den Strömungsverlauf des Kühlmediums über drei Einströmkanale 2 und zwei Abströmkanäle 3 bei einer möglichen Ausführung eines erfindungsgemäßen Teilkühlsystems für eine Kaskadenanordnung von mehreren Teilkühlsystemen nebeneinander. Dabei sind links und rechts je zwei Ständerteilblechpakete mit offenen und geschlossenen Nuten 8 angeordnet. Hier sind sowohl die Zuströmkanäle 2 als auch die Abströmkanäle 3 axial seitlich vollständig mit Endblechen 27 verschlossen. Zwischen beiden Ständerteilblechpaketen mit offenen und geschlossenen Nuten 8 ist mindestens ein oder auch eine beliebige Anzahl von Ständerteilblechpaketen mit geschlossenen Nuten 7 angeordnet. Zwischen jedem einzelnen Ständerteilblechpaket 7 und den beiden Ständerteilblechpaketen mit offenen und geschlossenen Nuten 8 sind je ein Leiteinrichtungs- und Abstandshaltersegment mit Stegen 4 angeordnet, wodurch die radialen Kühlbereiche 22 entstehen. Das Kühlmedium wird hier nur auf einer Maschinenseite radial über die offenen Kanalabschnitte 6.1 des ersten Ständerteilblechpaketes mit offenen und geschlossenen Nuten 8 zugeführt. Anschließend erfolgt die Kühlung des Maschineninneren nach dem gleichen Prinzip wie bereits vorstehend beschrieben. Auf der anderen Seite wird das erwärmte Kühlmedium über die offenen Kanalabschnitte 6.1 des zweiten Ständerteilblechpaketes mit offenen und geschlossenen Nuten 8 radial abgeführt. Es ist auch denkbar eine hochausgenutzte rotierende elektrische Maschine mit einem Kühlsystem nur nach diesem Aufbau erfindungsgemäß auszuführen.

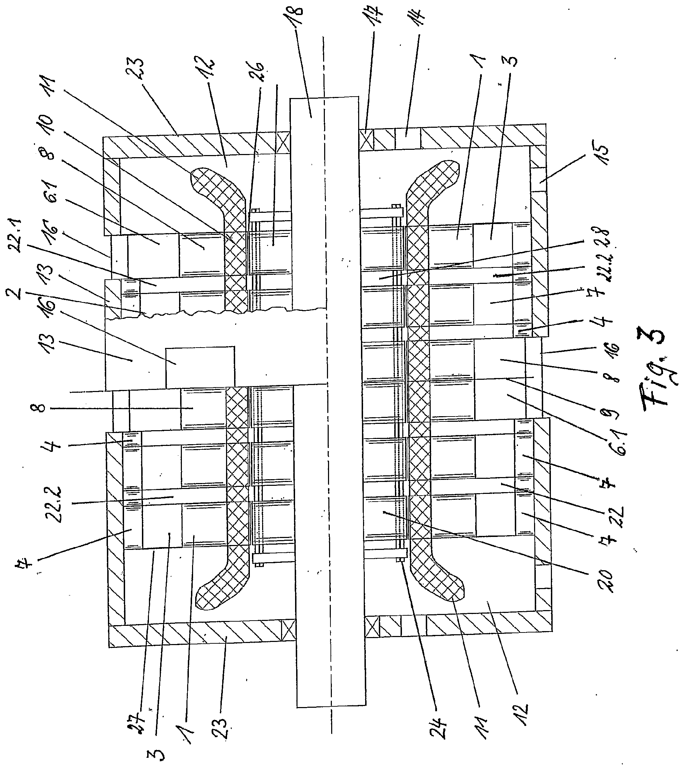

Figur 3 zeigt hälftig je einen axialen Schnitt durch den Gesamtaufbau zweier bevorzugter Ausführungsvarianten einer hochausgenutzten rotierenden elektrischen Maschine. Die untere Hälfte der Zeichnung gemäß Figur 3 bildet ein erfindungsgemäßes Kühlsystem in spiegelsymmetrischer Anordnung ab. Diese Beispielausführung zeigt eine rotierende elektrische Maschine mit einer Gehäuseausführung. Am Gehäuse 13 sind links und rechts Lagerschilde 23 angeordnet. In den Lagerschilden sind die Maschinenlager 17 zentrisch befestigt in denen die Läuferwelle 18 gelagert ist. In den Lagerschilden 23 sind axiale Gehäuseöffnungen zur Kühlmediumzuführung eingebracht. Genauso kann die Kühlmediumzuführung auch über die beiden radial links und rechts angeordneten Gehäuseöffnungen 15, die in die beiden Wicklungskopfräume 12 münden, erfolgen. Jeweils umströmt das zugeführte Kühlmedium zuerst die Ständerwicklungsköpfe 11 und kühlt diese. Auf der Läuferwelle 18 ist das Läuferblechpaket 19 aufgeschrumpft, das aus mehreren gleichartigen Läuferteilblechpaketen 20 zusammengesetzt ist. Zwischen den Läuferteilblechpaketen 20 sind radiale Zwischenbereiche 28 zur Läuferkühlung angeordnet, die durch geeignete, entsprechend dimensionierte Leiteinrichtungs- und Abstandshaltersegmente für den Läufer ausgebildet werden. Im Läuferblechpaket 19 ist eine Läuferwicklung 24, hier als Kurzschlusswicklung ausgeführt, eingelegt. Im Gehäuse 13 ist das Ständerblechpaket 1 montiert. Die Länge des Läuferblechpaketes 19 und seine Unterteilung durch die Läuferteilblechpakete 20 ist identisch mit der Länge des Ständerblechpakets 1 und seiner Unterteilung durch die Ständerteilblechpakete 7 und 8. Jeweils jedem radialen Kühlbereich 22 des Ständerteilblechpaketes 1 liegt radial innen genau ein radialer Zwischenbereich 28 des Läuferblechpaketes 19 gegenüber. Beim erfindungsgemäßen spiegelsymmetrischen Kühlsystem dieser hochausgenutzten rotierenden elektrischen Maschine besteht das Ständerblechpaket 1 aus links und rechts außen angeordneten, nebeneinander gesetzten, zwei gleichartigen Ständerteilblechpaketen mit geschlossenen Kanälen 7.In der Maschinenmitte sind unmittelbar nebeneinander, d. h. nicht durch ein Leiteinrichtungs- und Abstandshaltersegment mit Stegen 4 getrennt, zwei Ständerteilblechpakete mit offenen und geschlossenen Kanälen 8 angeordnet. Zwischen den einzelnen Ständerteilblechpaketen 7, 7 und 8 sind Leiteinrichtungs- und Abstandshaltersegmente mit Stegen 4, die die radialen Kühlbereiche bilden angeordnet. Diese sind am Umfang zum Rücken des Ständerblechpakets 1 hin kreisförmig geschlossen ausgebildet. Im Ständerblechpaket 1 ist eine Ständerwicklung 10 eingelegt. Die Wicklungsköpfe 11 der Ständerwicklung 10 sind weitausladend ausgeführt, damit sie ebenfalls gut gekühlt werden können. Erfindungsgemäß sind im Rücken am Außendurchmesser des Ständerblechpaketes 1 über seine gesamte Länge axial beidseitig offene Zuströmkanäle 2 und beidseitig verschlossene Abströmkanäle 3 über den Radius abwechselnd verteilt mit etwa gleichem axialen Querschnitt angeordnet. In der unteren Ausführung befindet sich durch die Aufteilung in zwei Teilkühlsysteme zwei Abströmkanäle 3 im Schnittbereich der rotierenden elektrischen Maschine. Beide sind jeweils gegenüber den Wicklungskopfraum 12 mit entsprechend ausgebildeten Endblechen 27 verschlossen. In der Mitte des Läufer trennt ein Zwischenwandelement 9 die beiden unmittelbar nebeneinander angeordneten Ständerteilblechpakete mit offenen und geschlossenen Kanälen 8. Über den beiden jeweils offenen Kanalabschnitten 6.1 ist im Gehäuse 13 eine entsprechend angepasste durchgehende Gehäuseausströmöffnung 16 angeordnet. Das Kühlmedium kann auch gleichzeitig durch die axialen Gehäuseöffnungen 14 und die radialen Gehäuseöffnungen zugeführt werden. Es strömt über die Wicklungsköpfe 11 durch Öffnungen, die an entsprechenden Stellen im Endblech 27 angeordnet sind, axial in die offenen Zuströmkanäle 2 der Ständerteilblechpakete mit geschlossenen Kanälen 7 ein. Das Kühlmedium teilt sich axial in einem Zuströmkanal 2 wie bereits vorstehend beschrieben in zwei Teilkühlmediumströme auf, die radial umgelenkt werden und über die radialen Kühlbereiche der Zuströmkanäle 22.1 in das Maschineninnere durch den Luftspalt 26 hindurch bis auf die Läuferwelle 18 gedrückt werden. Dort wird das Kühlmedium verwirbelt und über die auf die radialen Kühlbereiche der Abströmkanäle 22.2 nach außen in den Abströmkanal 3 gedrückt. Über die offenen Kanalabschnitte 6.1 strömt das erwärmte Kühlmedium in der Maschinenmitte durch die Gehäuseausströmöffnung 16 nach außen.

Die obere Hälfte der Zeichnung zeigt eine Ausführungsvariante, in der das Kühlmedium radial über die offenen Kanäle eines axial außen angeordneten Ständerteilblechpaketes mit offen und geschlossenen Kanälen 8 zugeführt wird. Diese hochausgenutzte rotierende elektrische Maschine besteht aus einer Reihe von sechs Teilblechpaketen deren Länge und Unterteilung für Ständer und Läufer ebenfalls identisch ist. In Umfangrichtung betrachtet wechseln sich im Rücken des Ständerblechpaketes 1 Zuströmkanäle 2 und Abströmkanäle 3 ab. Die Zuströmkanäle 2 und Abströmkanäle 3 umfassen jeweils zwei Nutteilungen. Es sind hier zwei symmetrische Teilkühlsysteme angeordnet, die ebenfalls aus je drei Teilblechpaketen aufgebaut sind, wobei allerdings ein Teilkühlsystem bezogen auf das andere um genau einen Zu- bzw. Abströmkanal 2, 3 verdreht im Gehäuse 13 montiert ist. Der Aufbau solch eines Teilkühlsystems aus drei Teilblechpaketen besteht hier aus zwei Ständerteilblechpaketen mit offen und geschlossenen Kanälen 8. Dazwischen ist ein Ständerteilblechpaketes mit geschlossenen Kanälen 7 angeordnet. Die beiden axial innenliegenden Ständerteilblechpakete mit offen und geschlossenen Kanälen 8 sind nur durch ein Zwischenwandelement 9 voneinander getrennt. In dieser Ausführung eines erfindungsgemäßen Kühlsystems mit gegeneinander verdrehten Teilkühlsystemen sind sowohl die Abströmkanäle 3 als auch die Zuströmkanäle 2 beidseitig durch durchgehend geschlossen ausgeführte Endbleche 27 verschlossen. Das radial über die offenen Kanäle der axial außen angeordneten Ständerteilblechpakete mit offen und geschlossenen Kanälen 8 zugeführte Kühlmedium strömt, wie bereits vorstehend beschrieben, durch das Innere der Maschine und wird ebenfalls in der Maschinemitte über die offenen Kanäle der axial innen angeordneten Ständerteilblechpakete mit offen und geschlossenen Kanälen 8 abgeführt. Die Kühlmittelabführung der beiden Teilkühlsysteme erfolgt gegeneinander um einen Zu- und Abströmkanal 2, 3 versetzt. Deshalb ist zur besseren Übersichtlichkeit in der Maschinenmitte ein Gehäusestück abgebildet, aus dem die Lage einer entsprechend versetzten radialen Gehäuseausströmöffnung 16 ersichtlich ist. Die beiden Wicklungsköpfe 11 werden in dieser Ausführungsvariante gesondert in bekannter Art und Weise gekühlt.

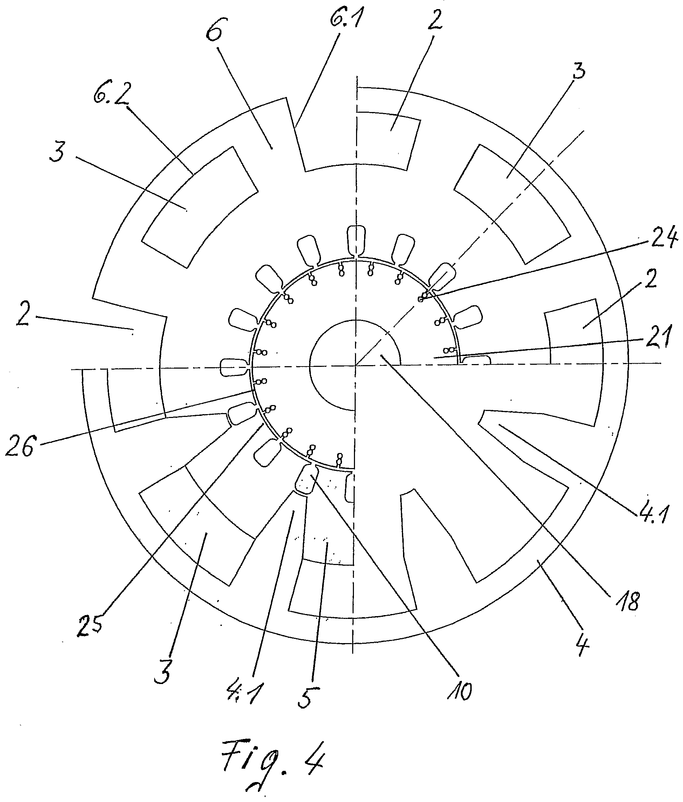

Figur 4 zeigt auszugsweise einen radialen Querschnitt in mehreren Ebenen durch die erfindungsgemäßen Ständerteilblechpakete 7 und 8 einschließlich eines Leiteinrichtungs- und Abstandshaltersegments mit breiten keilförmigen Stegen 4.1 und einem zugehörigen Läuferblech 21. Diese Figur zeigt Übersichtsweise eine Zusammenstellung der erfindungsgemäßen Einzelteile aus denen das Kühlsystem aufgebaut ist. Auf der Läuferwelle 18 ist das Läuferblech 21 befestigt. Aus diesem Läuferblech 21 sind alle einzelnen Läuferteilblechpakete 20 analog der Länge der einzelnen Ständerteilblechpakete 7 und 8 gesetzt. Im Läuferblechpaket 21 ist die Läuferwicklung 24 angeordnet. In einem Viertelkreis ist ein erfindungsgemäßes Einzelblech mit geschlossenen Kanalabschnitten 5 und der entsprechenden Verteilung der Zuströmkanäle 2 und Abströmkanäle 3 gezeigt. Aus mehreren dieser Einzelbleche mit geschlossenen Kanalabschnitten 5 sind die Ständerteilblechpakete mit geschlossenen Kanälen 7 gesetzt. In einem zweiten Viertelkreis ist ein sternförmiges Einzelblech mit offenen und geschlossenen Kanalabschnitten 6 und der entsprechenden Verteilung der Zuströmkanäle 2 und Abströmkanäle 3 gezeigt. Aus mehreren dieser Einzelbleche mit offenen und geschlossenen Kanalabschnitten 6 sind die Ständerteilblechpakete mit offenen und geschlossenen Kanälen 8 gesetzt. Gleichfalls wird hierbei auch die Verteilung der wechselseitigen offenen Kanalabschnitte 6.1 und der geschlossenen Kanalabschnitte 6.2 in dieser Ausführung ersichtlich. In einem dritten Viertelkreis ist ein Leiteinrichtungs- und Abstandshaltersegment mit Stegen 4 gezeigt. Es ist über seinen Umfang im Rückenbereich des Ständerblechpaketes 1 kreisförmig geschlossen ausgeführt. Diese Leiteinrichtungs- und Abstandshaltersegmente mit Stegen 4 besitzen bevorzugt den gleichen Durchmesser wie das Ständerblechpaket 1. Im Bereich der geschlossenen und offenen Kanäle sind mindestens gleich große Ausnehmungen angeordnet, so dass keilförmige Stege, die radial nach Innen zeigen entstehen. Hier sind diese Stege in der Ausführung als breite keilförmige Stegen 4.1 abgebildet. In einem vierten Viertelkreis ist ein Leiteinrichtungs- und Abstandshaltersegment mit breiten keilförmigen Stegen 4.1 und seiner Erstreckung bis nahezu auf die Ständerwicklung 10 gezeigt. In diesem Ausführungsbeispiel sind die Zuströmkanäle 2 und die Abströmkanäle gleich dimensioniert und umfassen jeweils zwei Nutteilungen. Vorzugsweise sind diese Leiteinrichtungs- und Abstandshaltersegmente mit Stegen 4, bzw. 4.1 oder 4.2 aus den gleichen gestanzten Ständerblechen (sogenannten einen oder mehreren Distanzblechen) durch Heraustrennen einzelner Blechsegmentteile hergestellt.

Die erfindungsgemäße Lösung lässt sich ohne große Änderungen auch für andere elektrische Maschinen insbesondere für Synchronmaschinen z. B. mit einer Läuferausführung mit Permanentmagneten anwenden.

### Bezugszeichenliste

- 1: Ständerblechpaket
- 2: Zuströmkanäle
- 3: Abströmkanäle
- 4: Leiteinrichtungs- und Abstandshaltersegment mit Stegen
- 4.1: breite keilförmige Stege
- 4.2: lange schmale Stege
- 5: Einzelblech mit geschlossenen Kanalabschnitten
- 6: sternförmiges Einzelblech mit offenen und geschlossene Kanalabschnitten
- 6.1: offener Kanalabschnitt
- 6.2: geschlossener Kanalabschnitt
- 7: Ständerteilblechpaket mit geschlossenen Kanälen
- 8: Ständerteilblechpaket mit offenen und geschlossenen Kanälen
- 9: Zwischenwandelement
- 10: Ständerwicklung
- 11: Standerwicklungskopf
- 12: Wicklungskopfraum
- 13: Gehäuse
- 14: axiale Gehäuseöffnung
- 15: radiale Gehäuseöffnung
- 16: radiale Gehäuseausströmöffnung
- 17: Maschinenlager
- 18: Läuferwelle
- 19: Läuferblechpaket
- 20: Läuferteilblechpakete
- 21: Läuferblech
- 22: radiale Kühlbereiche
- 22.1: radialer Kühlbereich im Zuströmkanal
- 22.2: radialer Kühlbereich im Abströmkanal
- 23: Lagerschild
- 24: Läuferwicklung
- 25: Zahn des Ständerblechpakets
- 26: Luftspalt
- 27: Endblech
- 28: radiale Zwischenbereiche

## Patentansprüche

1. Kühlsystem für hochausgenutzte rotierende elektrische Maschinen mit oder/ohne Maschinengehäuse, mit Fremd- oder Eigenkühlung, insbesondere für Drehstrommaschinen mit einem Ständer- und Läuferblechpaket bestehend aus Teilblechpaketen, wobei die Teilblechpakete mit Leiteinrichtungs- und Abstandshaltersegmenten voneinander beabstandet sind,
**dadurch gekennzeichnet,**
**dass** die Ständerteilblechpakete (7, 8) aus unterschiedlichen Einzelblechen mit radial offenen oder radial geschlossenen Kanalabschnitten (6.1, 6.2) gesetzt sind, so dass die radial geschlossenen Kanalabschnitte (6.2) Zuströmkanäle und Abströmkanäle über den Umfang im Inneren des Ständerblechpaketes (1) auf einem bestimmten Radius verteilt und die radial offenen Kanalabschnitte (6.1) Öffnungen für den radialen Kühlmediumaustritt auf dem Umfang verteilt ausbilden,
**dass** im Rücken am Außendurchmesser des Ständerblechpaketes (1) über seine gesamte Länge axial beidseitig offene Zuströmkanäle (2) und beidseitig verschlossene Abströmkanäle (3) über den Umfang im Inneren des Ständerblechpaketes (1) auf einem bestimmten Radius verteilt mit etwa gleichem axialen Querschnitt angeordnet sind,
im Bereich des Rückens des Ständerblechpaketes (1) zwischen einem oder mehreren Ständerteilblechpaketen mit geschlossenen Kanälen (7) und mindestens einem Ständerteilblechpaket mit geschlossenen und offenen Kanälen (8)
in radialer Richtung am Umfang nach außen geschlossene Leiteinrichtungs- und Abstandshaltersegmente mit Stegen (4) angeordnet sind,
an denen nach Innen gerichtete breite keilförmige Stege (4.1) oder lange schmale Stege (4.2) entsprechend der Anzahl der Zu- (2) und Abströmkanäle (3) ausgebildet sind,
das oder die Ständerteilblechpakete mit geschlossenen Kanälen (7) aus einer Anzahl gleich geformter Einzelbleche mit geschlossenen Kanalabschnitten (5) gesetzt sind,
wobei jeweils mindestens ein Ständerteilblechpaket (8) aus sternförmigen Einzelblechen mit offenen und geschlossenen Kanalabschnitten (6) gesetzt ist und
bei Gehäuseausführung im Gehäuse (13) an den Stellen des Ständerteilblechpaketes mit offenen Kanälen radiale Gehäuseausströmöffnungen (16) angeordnet sind.

2. Kühlsystem für hochausgenutzte rotierende elektrische Maschinen nach Anspruch 1,
**dadurch gekennzeichnet,**
**dass** das Ständerblechpaket (1) der elektrischen Maschine in der Mitte geteilt ausgeführt ist und bei gegeneinander um einen Zuströmkanal (2) und Abströmkanal (3) verdrehter Anordnung zweier hintereinanderfolgender Ständerteilblechpakete mit offenen und geschlossenen Kanälen (8) ein Zwischenwandelement (9) angeordnet ist.

3. Kühlsystem für hochausgenutzte rotierende elektrische Maschinen nach Anspruch 2,
**dadurch gekennzeichnet,**
**dass** das Zwischenwandelement (9) durchgehend geschlossen ausgebildet ist und einen gleichen oder größeren Durchmesser wie das Ständerblechpaket (1) besitzt.

4. Kühlsystem für hochausgenutzte rotierende elektrische Maschinen nach Anspruch 2 oder 3,
**dadurch gekennzeichnet,**
**dass** das Zwischenwandelement (9) in der Mitte der rotierenden elektrischen Maschine zwischen einem Ständerteilblechpaket mit geschlossenen Kanälen (7) und einem Ständerteilblechpaket mit offenen und geschlossenen Kanälen (8) oder zwischen zwei gleichen Ständerteilblechpaketen mit offenen und geschlossenen Kanälen (8) angeordnet ist.

5. Kühlsystem für hochausgenutzte rotierende elektrische Maschinen nach Anspruch 1,
**dadurch gekennzeichnet,**
**dass** die nach innen gerichteten Stege des Leiteinrichtungs- und Abstandshaltersegments (4) als breite keilförmige Stege (4.1) ausgebildet sind, die sich bis in die Nutbereiche zwischen die Ständerteilblechpakete (7, 8) erstrecken und nahezu auf der Isolation der Wicklung (10) aufliegen.

6. Kühlsystem für hochausgenutzte rotierende elektrische Maschinen nach Anspruch 1,
**dadurch gekennzeichnet,**
**dass** die nach innen gerichteten Stege des Leiteinrichtungs- und Abstandshaltersegments (4) als lange schmale Stege (4.2) ausgebildet sind, die sich bis in die Bereiche der Zähne des Ständerblechpaketes (25) bis unmittelbar an den Luftspalt (26) erstrecken.

7. Kühlsystem für hochausgenutzte rotierende elektrische Maschinen nach Anspruch 1,
**dadurch gekennzeichnet,**
**dass** jeweils ein Zuströmkanal (2) oder mehrere Zuströmkanäle (2) nebeneinander in Umfangsrichtung und anschließend ein Abströmkanal (3) oder mehrere Abströmkanäle (3) nebeneinander in Umfangsrichtung so angeordnet sind, dass diese mehrere Nut- oder Zahnteilungen umfassen.

8. Kühlsystem für hochausgenutzte rotierende elektrische Maschinen nach Anspruch 1 oder 7,
**dadurch gekennzeichnet,**
**dass** die Abströmkanäle (3) im Ständerteilblechpaket (1) mit einem an diesen Stellen verschlossen ausgeführten Endblech (27) gegenüber dem Wicklungskopfraum (12) verschlossen sind.

9. Kühlsystem für hochausgenutzte rotierende elektrische Maschinen nach Anspruch 1, 5 oder 6,
**dadurch gekennzeichnet,**
**dass** die Leiteinrichtungs- und Abstandshaltersegmente (4, 4.1, oder 4.2) mit Stegen in den Zwischenräumen zwischen den Ständerteilblechpaketen mit geschlossenen und offenen Kanälen (7, 8) aus einem oder mehreren gestanzten Distanzblechen oder aus einem breiteren Formteil bestehen.

10. Kühlsystem für hochausgenutzte rotierende elektrische Maschinen nach Anspruch 1,
**dadurch gekennzeichnet,**
**dass** die Fremdkühlung durch einen gesondert angeordneten Lüfterbaustein erfolgt, der axial, oder radial seitlich oder radial oben angeordnet ist.

11. Kühlsystem für hochausgenutzte rotierende elektrische Maschinen nach Anspruch 9,
**dadurch gekennzeichnet,**
**dass** die Fremdkühlung jeweils an einem oder an beiden Enden oder mehrfach über die Länge des Ständerblechpakets (1) verteilt, innerhalb des Ständerblechpaketes (1) radial durch einen gesondert angeordneten Lüfterbaustein oder mehrere gesondert angeordnete Lüfterbausteine erfolgt.

12. Kühlsystem für hochausgenutzte rotierende elektrische Maschinen nach Anspruch 1, 5, 6 oder 9,
**dadurch gekennzeichnet,**
**dass** die Leiteinrichtungs- und Abstandshaltersegmente mit Stegen (4, 4.1 öder 4.2) im Raum zwischen den Ständerteilblechpaketen mit geschlossenen und offenen Kanälen (7, 8) so ausgeführt sind, dass sich der freie durchströmbare Querschnitt der radialen Kühlbereiche (22) radial nach Innen verkleinert.

13. Kühlsystem für hochausgenutzte rotierende elektrische Maschinen nach Anspruch 1, 7 oder 8,
**dadurch gekennzeichnet,**
**dass** der axiale Querschnitt der Zuströmkanäle (2) und Abströmkanäle (3) unterschiedlich groß ausgebildet ist.

14. Kühlsystem für hochausgenutzte rotierende elektrische Maschinen nach Anspruch 1,
**dadurch gekennzeichnet,**
**dass** an den Zuströmkanälen (2) axial beidseitig Lüfter angeordnet sind,
die Abströmkanäle (3) axial verschlossen sind,
wobei ein oder zwei Ständerteilblechpakete mit offenen und geschlossenen Kanälen (8) in der Maschinenmitte gegenüber den Wicklungskopfraum (12) symmetrisch angeordnet sind und bei Gehäuseausführung die radialen Gehäuseabströmöffnungen (16) ebenfalls mittig symmetrisch im Gehäuse (13) über den offenen Kanälen des Ständerteilblechpaketes mit offenen und geschlossenen Kanälen (8) auf dem Radius verteilt angeordnet sind.

15. Kühlsystem für hochausgenutzte rotierende elektrische Maschinen nach Anspruch 1,
**dadurch gekennzeichnet,**
**dass** die Zuströmkanäle (2) und die Abströmkanäle (3) im Querschnitt unterschiedlich groß ausgebildet sind,
wobei die zugehörigen Leiteinrichtungs- und Abstandshaltersegmente mit Stegen (4) so ausgebildet sind,
**dass** die radialen Zuströmkanäle (2), durch die das Kühlmedium zuströmt, sich über eine andere Zahl von mehreren Nut- oder Zahnteilungen erstrecken, als die radialen Abströmkanäle (3), durch die das Kühlmedium abströmt.

16. Kühlsystem für hochausgenutzte rotierende elektrische Maschinen nach einem der vorstehenden Ansprüche,
**dadurch gekennzeichnet,**
**dass** sich die Zuströmkanäle (2) im Ständerblechpaket (1) in Strömungsrichtung gesehen konisch und/oder treppenförmig verjüngen und die Abströmkanäle (3) im Ständerblechpaket (1) in Strömungsrichtung gesehen konisch und/oder treppenförmig erweitern.

17. Kühlsystem für hochausgenutzte rotierende elektrische Maschinen nach Anspruch 1,
**dadurch gekennzeichnet,**
**dass** bei drückender Belüftung an den offenen Kanälen der sternförmigen Ständerteilblechpakete (8) bzw. bei Gehäuseausführung an den Gehäuseabströmöffnungen (16) über den offenen Kanälen der Ständerteilblechpakete mit offenen und geschlossenen Kanälen zusätzlich ein saugender Lüfter angeordnet ist.

18. Kühlsystem für hochausgenutzte rotierende elektrische Maschinen nach Anspruch 1,
**dadurch gekennzeichnet,**
**dass** an den offenen Kanälen der sternförmigen Ständerteilblechpakete (8) bzw. bei Gehäuseausführung an den Gehäuseabströmöffnungen (16) nur ein saugender Lüfter angeordnet ist.

19. Kühlsystem für hochausgenutzte rotierende elektrische Maschinen mit oder/ohne Maschinengehäuse, mit Fremd- oder Eigenkühlung, insbesondere für Drehstrommaschinen mit einem Ständer- und Läuferblechpaket bestehend aus Teilblechpaketen, wobei die Teilblechpakete mit Leiteinrichtungs- und Abstandshaltersegmenten voneinander beabstandet sind,
**dadurch gekennzeichnet,**
**dass** die Ständerteilblechpakete (7, 8) aus unterschiedlichen Einzelblechen mit radial offenen oder radial geschlossenen Kanalabschnitten (6.1, 6.2) gesetzt sind,
wobei das Kühlsystem Ständerteilblechpakete mit offenen und geschlossenen Kanälen (8) und Ständerteilblechpakete mit geschlossenen Kanälen (7) aufweist,
die Zuströmkanäle (2) und Abströmkanäle (3) ausbilden,
wobei die Zuströmkanäle (2) und Abströmkanäle (3) axial seitlich vollständig mit Endblechen (27) verschlossen sind,
wobei die Zuströmkanäle (2) und Abströmkanäle (3) sich in Umfangsrichtung betrachtet im Rücken des Ständerblechpaketes abwechseln,
so dass das Kühlmedium nur auf einer Maschinenseite radial über die offenen Kanalabschnitte (6.1) des ersten Ständerblechpaketes mit offenen und geschlossenen Nuten (8) zugeführt wird,
und auf der anderen Seite das erwärmte Kühlmedium über die offenen Kanalabschnitte (6.1) des zweiten Ständerteilblechpaketes mit offenen und geschlossenen Nuten (8) radial abgeführt wird,
wobei zwischen jedem einzelnen Ständerblechpaket (7) und den beiden Ständerblechpaketen mit offenen und geschlossenen Nuten (8) je eine Leiteinrichtungs- und Abstandshaltersegment mit Stegen (4) angeordnet sind,
wodurch radiale Kühlbereiche (22) entstehen,
wobei zwei oder mehrere unabhängige Teilkühlsysteme ausgebildet sind,
indem zwei Ständerteilblechpakete mit offenen und geschlossenen Kanälen (8) und dazwischen mindestens ein oder eine beliebige Anzahl von mit geschlossenen Kanälen (7) ein Teilkühlsystem bilden,
wobei die beiden axial innen liegenden Ständerblechpakete mit offenen und geschlossenen Kanälen (8) nur durch ein Zwischenwandelement (9) voneinander getrennt sind,
wobei die Teilkühlsysteme gegeneinander zum einen Zu-bzw. Abströmkanal (2, 3) verdreht angeordnet sind
und wobei die Kühlmittelführung der beiden Teilkühlsysteme gegeneinander um einen Zu- und Abströmkanal (2, 3) versetzt erfolgt,
und wobei die Fremdkühlung an den beiden Enden der Teilkühlsysteme angeordnet ist oder mehrfach radiale angeordnete Lüfterbausteine verteilt über die Länge des Ständerblechpaketes (1) angeordnet sind.

## Claims

1. A cooling system for heavy-servicerotating electrical machines with or without machine housings, with external or self-cooling, in particular for three-phase current machines with stator and rotorlaminated coresconsisting of laminated subcores, the laminated subcoresbeing spaced apart from one another with guidedevice and spacingsegments,
**characterized in that**
the stator laminatedsubcores (7, 8) are built up from differing individual metal sheets with radially open or radially closed channel portions (6.1, 6.2), so that the radially closed channel portions (6.2) form inflow and outflow channels across the circumference in the interior of the stator laminated core (1) distributed at a defined radius and the radially open channel portions (6.1) form openings for the radial coolant medium outflowdistributed across the circumference,
in the back on the outer diameter of the stator laminated core (1) across its entire length,two-sided open inflow channels (2) and two-sided closedoutflow channels (3) are axially arranged spread along the circumference in the interior of the stator laminated core (1) at a defined radius with approximately the same axial cross-section,
in the area of the back of the stator laminated core (1) between one or more stator laminated subcores with closed channels (7) and at least one stator laminatedsubcore with closed and open channels (8), closed guide device segments and spacing segments with fins (4)are arranged in radial orientation on the circumference towards the outside,
on which wide wedge-shaped fins (4.1) or long narrow fins (4.2) corresponding to the number of the inflow (2) and outflow channels (3) are formed towards the inside,
the stator laminated subcore(s) with closed channels (7) is/are built up by a number of identically formed individual metal sheets with closed channel sections (5),
with at least one stator laminated subcore (8) being built from star-shaped individual metal sheets with open and closed channel portions (6) and, if constructed with a housing, radial housing outflow openings (16) being positionedin the housing (13) at the locations of the stator laminated subcores with open channels.

2. The cooling system for heavy-service rotating electrical machines according to claim 1,
**characterized in that**
the stator laminated core (1) of the electrical machine is implemented aspartitioned in the middle anda partition wall element (9), two successive stator laminated subcores with open and closed channels (8)being arranged rotationally displaced relative to oneanother by one inflow channel (2) and outflow channel (3).

3. The cooling system for heavy-service rotating electrical machines according to claim 2,
**characterized in that**
the partition wall element (9) is formed continuously closed and possesses the same or larger diameter as the stator laminated core (1).

4. The cooling system for heavy-service rotating electrical machines according to claim 2 or 3,
**characterized in that**
the partition wall element (9) is positioned in the centre of the rotating electrical machine between a stator laminated subcore with closed channels (7) and a stator laminated subcore with open and closed channels (8) or between two identical stator laminated subcores with open and closed channels (8).

5. The cooling system for heavy-service rotating electrical machines according to claim 1,
**characterized in that**
the inward orientated fins of the guide device and spacing segment (4) are formed as wide, wedge-shaped fins (4.1), which extend up to the slot regions between the stator laminated subcores (7, 8) and nearly lie upon the insulation of the winding (10).

6. The cooling system for heavy-service rotating electrical machines according to claim 1,
**characterized in that**
the inward orientated fins of the guide device and spacing segment (4) are formed as long narrow fins (4.2), which extend up into the regions of the teeth of the stator laminated core (25) up to directly upon the air gap (26).

7. The cooling system for heavy-service rotating electrical machines according to claim 1,
**characterized in that**
in each case aninflow channel (2) or several inflow channels (2) alongside one another in a circumferential orientation and following that an outflow channel (3) or several outflow channels (3) alongside one another in a circumferential direction are positionedsuch that these encompass several slot or tooth spacings.

8. The cooling system for heavy-service rotating electrical machines according to claim 1 or 7,
**characterized in that**
the outflow channels (3) in the stator laminated subcore(1) are closed against the end winding space (12) with a closed-construction end plate (27) at thesepoints.

9. The cooling system for heavy-service rotating electrical machines according to claim 1, 5 or 6,
**characterized in that**
the guide device and spacing segments (4, 4.1, or 4.2) with fins in the interspaces between the stator laminated subcores with closed and open channels (7, 8) are composed of one or severalblanked out spacing sheets or from a single wider moulded part.

10. The cooling system for heavy-service rotating electrical machines according to claim 1,
**characterized in that**
the external cooling takes place through a separately positioned ventilator component, which is positioned axially, or radially on the side, or radially above.

11. The cooling system for heavy-service rotating electrical machines according to claim 9,
**characterized in that**
the external cooling takes place on one or both ends or distributed repeatedly along the length of the stator laminated core (1), within the stator laminated core (1) radially through a separately positioned ventilator component or several separately positioned ventilator components.

12. The cooling system for heavy-service rotating electrical machines according to claim 1,5, 6 or 9,
**characterized in that**
the guide device and spacing segments with fins (4, 4.1 or 4.2) are implemented in the space between the stator laminatedsubcores with closed and open channels (7, 8) such that the clear flow-through cross-section of the radial cooling regions (22) decreases radially towards the inside.

13. The cooling system for heavy-service rotating electrical machines according to claim 1, 7 or 8,
**characterized in that**
the axial cross-sections of the inflow channels (2) and outflow channels (3) are of different sizes.

14. The cooling system for heavy-service rotating electrical machines according to claim 1,
**characterized in that**
ventilators are positioned axially on both sides on the inflow channels (2),
the outflow channels (3) are axially closed,
one or two stator laminated subcores with open and closed channels (8) being symmetrically positioned in the centre of the machine opposite the end winding space (12) and, if constructed with a housing, the radial housing outflow openings (16) being also positioned symmetrically in the housing (13) across the open channels of the stator laminated subcores with open and closed channels (8) along the radius.

15. The cooling system for heavy-service rotating electrical machines according to claim 1,
**characterized in that**
the inflow channels (2) and the outflow channels (3) are formed with different sizesin cross-section,
the associated guide device and spacing segments with fins (4) being formed such that the radial inflow channels (2), through which the coolant medium flows in, extend across a different number of several slot or tooth spacings as do the radial outflow channels (3), through which the coolant medium flows outward.

16. The cooling system for heavy-service rotating electrical machines according to one of the preceding claims,
**characterized in that**
the inflow channels (2) in the stator laminated core (1), seen in the direction of the inflow,taper down in a conical and/or stepped fashion and the outflow channels (3) in the stator laminated core (1), seen in the direction of the outflow, broaden out in a conical and/or stepped fashion.

17. The cooling system for heavy-service rotating electrical machines according to claim 1,
**characterized in that**
with pressurized ventilation an additional suction ventilator is positionedat the open channels of the star-shaped stator laminated subcores (8) or, if constructed with a housing, at the housing outflow openings (16) across the open channels of the stator laminated subcores with open and closed channels.

18. The cooling system for heavy-service rotating electrical machines according to claim 1,
**characterized in that**
only a single suction ventilator is positioned at the open channels of the star-shaped stator laminated subcores (8) or,if constructed with a housing, at the housing outflow openings (16).

19. The cooling system for heavy-service rotating electrical machines with or without machine housing, with external or self-cooling, in particular for three-phase current machines with stator and rotorlaminated coresconsisting of laminated subcores, the laminated subcores being spaced apart from one another with guide device and spacing segments,
**characterized in that**
the stator laminated subcores (7, 8) are built up from differing individual metal sheets with radially open or radially closed channel portions (6.1, 6.2),
wherein the cooling system contains stator laminated subcores with open and closed channels (8) and stator laminated subcores with closed channels (7),
which form inflow channels (2) and outflow channels (3),
with the inflow channels (2) and outflow channels (3) on the axial side being completely closed with end plates (27),
with the inflow channels (2) and outflow channels (3) alternating in the back of the stator laminated core, viewed from the direction of the circumference,
so that the coolant medium will only be supplied radially on one machine side through the open channel portions (6.1) of the first stator laminated subcore with open and closed slots (8),
and on the other side the heated coolant medium will be discharged radially through the open channel portions (6.1) of the second stator laminated subcore with open and closed slots (8),
in which one each of the guide device and spacing segments with fins (4) is positioned between each individual stator laminated subcore (7) and both stator laminated subcores with open and closed slots (8),
whereby radial cooling regions (22) develop,
in which two or several independent cooling subsystems are formed,
two stator laminated subcores with open and closed channels (8) and in-between at least one or any number of those with closed channels (7) forming a cooling subsystem,
both axial,inside positioned, stator laminated subcoreswith open and closed channels (8) being only separated from one another by a partition wall element (9),
the cooling subsystems being positioned rotationally displaced relative to one another by one inflowandoutflow channel (2, 3),
and the coolant medium supply of both cooling subsystems taking place offset against one another by an inflow and outflow channel (2, 3),
and the external cooling being positioned at both ends of the cooling subsystems or repeated radially orientated ventilator components are positioned distributed along the length of the stator laminated core (1).

## Revendications

1. Système de refroidissement pour machines électriques rotatives à très haute utilisation, avec ou sans carter de machine, avec refroidissement externe ou logé, en particulier pour les machines à courant triphasé avec un empilage de tôles de stator et de rotor constitué d'empilages partiels de tôles, les empilages partiels de tôles étant espacés les uns des autres par des segments de guidage et d'écartement,
**caractérisé en ce que**
les empilages partiels de tôles de stator (7, 8) sont composés de différentes tôles individuelles avec des tronçons de canal ouverts radialement ou fermés radialement (6.1, 6.2), de sorte que les tronçons de canal fermés radialement (6.2) forment des canaux d'entrée et de sortie répartis sur la circonférence à l'intérieur de l'empilage de tôles de stator (1) sur un rayon donné, tandis que les tronçons de canal ouverts radialement (6.1) forment des orifices pour la sortie radiale de fluide frigorigène répartis sur la circonférence,
au dos sur le diamètre extérieur de l'empilage de tôles de stator (1) sur toute sa longueur, des canaux d'entrée (2) ouverts des deux côtés et des canaux de sortie (3) fermés des deux côtés sont agencés axialement et répartis sur la circonférence à l'intérieur de l'empilage de tôles de stator (1) sur un rayon donné, avec une coupe transversale axiale à peu près identique,
dans la partie dorsalede l'empilage de tôles de stator (1) entre un ou plusieurs empilages partiels de tôles de stator avec canaux fermés (7) et au moins un empilage partiel de tôles de stator avec canaux fermés et ouverts (8),
des segments de guidage et d'écartement fermés avec âmes (4) sont agencés dans le sens radial vers l'extérieur à la circonférence,
au niveau desquels sont formés de larges âmes cunéiformes (4.1) dirigées vers l'intérieur ou de longues âmes étroites (4.2) en fonction du nombre de canaux d'entrée (2) et de sortie (3), le ou les empilages partiels de tôles de stator avec canaux fermés (7) sont composés d'un nombre de tôles individuelles de forme identique avec des tronçons de canal fermés (5), sachant que chaque fois au moins un empilage partiel de tôles de stator (8) est composé de tôles individuelles étoilées avec des tronçons de canal ouverts et fermés (6) et que,
dans la variante avec un carter, des orifices d'échappement (16) radiaux sont agencés dans le carter (13) aux emplacements de l'empilage partiel de tôles de stator avec canaux ouverts.

2. Système de refroidissement pour machines électriques rotatives à très haute utilisation selon la revendication 1,
**caractérisé en ce que**
l'empilage de tôles de stator (1) de la machine électrique est réalisé avec une division au centre et **en ce qu'**un élément de paroi intermédiaire (9) est agencé en présence d'une disposition de deux empilages partiels de tôles de stator consécutifs avec canaux ouverts et fermés (8) déplacés l'un par rapport à l'autre d'un canal d'entrée (2) et d'un canal de sortie (3).

3. Système de refroidissement pour machines électriques rotatives à très haute utilisation selon la revendication 2,
**caractérisé en ce que**
l'élément de paroi intermédiaire (9) est fermé en continu et possède un diamètre égal ou supérieur à celui de l'empilage de tôles de stator (1).

4. Système de refroidissement pour machines électriques rotatives à très haute utilisation selon la revendication 2 ou 3,
**caractérisé en ce que**
l'élément de paroi intermédiaire (9) est agencé au centre de la machine électrique rotative entre un empilage partiel de tôles de stator avec canaux fermés (7) et un empilage partiel de tôles de stator avec canaux ouverts et fermés (8) ou entre deux empilages partiels de tôles de stator identiques avec canaux ouverts et fermés (8).

5. Système de refroidissement pour machines électriques rotatives à très haute utilisation selon la revendication 1,
**caractérisé en ce que**
les âmes dirigées vers l'intérieur du segment de guidage et d'écartement (4) prennent la forme de larges âmes cunéiformes (4.1), lesquelles s'étendent jusque dans les zones de rainures entre les empilages partiels de tôles de stator (7, 8) et reposent quasiment sur l'isolation de l'enroulement (10).

6. Système de refroidissement pour machines électriques rotatives à très haute utilisation selon la revendication 1,
**caractérisé en ce que**
les âmes dirigées vers l'intérieur du segment de guidage et d'écartement (4) prennent la forme de longues âmes étroites (4.2), lesquelles s'étendent jusque dans les zones des dents de l'empilage de tôles de stator (25), atteignant presque l'interstice d'air (26).

7. Système de refroidissement pour machines électriques rotatives à très haute utilisation selon la revendication 1,
**caractérisé en ce que**
chaque fois un canal d'entrée (2) ou plusieurs canaux d'entrée (2) sont agencés les uns à côté des autres dans le sens circonférentiel, puis un canal de sortie (3) ou plusieurs canaux de sortie (3) sont agencés les uns à côté des autres dans le sens circonférentiel, de telle sorte qu'ils recouvrent plusieurs divisions de rainures ou de dents.

8. Système de refroidissement pour machines électriques rotatives à très haute utilisation selon la revendication 1 ou 7,
**caractérisé en ce que**
les canaux de sortie (3) dans l'empilage partiel de tôles de stator (1) sont obturés avec une tôle d'extrémité (27) réalisée de manière fermée à ces emplacements en face de l'espace de tête d'enroulement (12).

9. Système de refroidissement pour machines électriques rotatives à très haute utilisation selon la revendication 1, 5 ou 6,
**caractérisé en ce que**
les segments de guidage et d'écartement (4, 4.1 ou 4.2) avec des âmes dans les intervalles entre les empilages partiels de tôles de stator avec canaux fermés et ouverts (7, 8) sont constitués d'une ou de plusieurs tôles d'espacement découpés ou d'un élément moulé plus large.

10. Système de refroidissement pour machines électriques rotatives à très haute utilisation selon la revendication 1,
**caractérisé en ce que**
le refroidissement externe est assuré par un module de ventilation agencé de manière séparée, axialement, radialement sur le côté ou radialement en haut.

11. Système de refroidissement pour machines électriques rotatives à très haute utilisation selon la revendication 9,
**caractérisé en ce que**
le refroidissement externe est réalisé chaque fois sur l'une ou sur les deux extrémités ou de manière multiple sur la longueur de l'empilage de tôles de stator (1), à l'intérieur de l'empilage de tôles de stator (1) radialement avec un module de ventilation agencé séparément ou plusieurs modules de ventilation agencés séparément.

12. Système de refroidissement pour machines électriques rotatives à très haute utilisation selon la revendication 1, 5, 6 ou 9,
**caractérisé en ce que**
les segments de guidage et d'écartement avec des âmes (4, 4.1 ou 4.2) dans l'espace entre les empilages partiels de tôles de stator avec canaux fermés et ouverts (7, 8) sont réalisés de telle sorte que la coupe transversale libre pouvant être parcourue des zones de refroidissement radiales (22) diminue radialement vers l'intérieur.

13. Système de refroidissement pour machines électriques rotatives à très haute utilisation selon la revendication 1, 7 ou 8,
**caractérisé en ce que**
la coupe transversale axiale des canaux d'entrée (2) et des canaux de sortie (3) ne présente pas la même taille.

14. Système de refroidissement pour machines électriques rotatives à très haute utilisation selon la revendication 1,
**caractérisé en ce que**
des ventilateurs sont agencés axialement des deux côtés au niveau des canaux d'entrée (2), les canaux de sortie (3) sont obturés axialement,
sachant qu'un ou deux empilages partiels de tôles de stator avec canaux ouverts et fermés (8) sont agencés symétriquement au centre de la machine en face de l'espace de tête d'enroulement (12) et que, dans la variante avec un carter, les orifices radiaux de sortie du carter (16) sont également agencés symétriquement au centre dans le carter (13) sur les canaux ouverts de l'empilage partiel de tôles de stator avec canaux ouverts et fermés (8) et répartis sur le rayon.

15. Système de refroidissement pour machines électriques rotatives à très haute utilisation selon la revendication 1,
**caractérisé en ce que**
les canaux d'entrée (2) et les canaux de sortie (3) ne présentent pas la même taille en coupe transversale,
sachant que les segments correspondants de guidage et d'écartement avec âmes (4) sont formés de telle sorte que
les canaux d'entrée radiaux (2), à travers lesquels arrive le fluide frigorigène, s'étendent sur un autre nombre multiple de divisions de rainures ou de dents que les canaux de sortie radiaux (3), à travers lesquels s'échappe le fluide frigorigène.

16. Système de refroidissement pour machines électriques rotatives à très haute utilisation selon l'une quelconque des revendications précédentes,
**caractérisé en ce que**
dans le sens d'écoulement, les canaux d'entrée (2) dans l'empilage de tôles de stator (1) rétrécissent de manière conique et/ou en forme d'escalier et les canaux de sortie (3) dans l'empilage de tôles de stator (1) s'élargissent de manière conique et/ou en forme d'escalier.

17. Système de refroidissement pour machines électriques rotatives à très haute utilisation selon la revendication 1,
**caractérisé en ce que**
un ventilateur aspirant est agencé en supplément en présence d'une ventilation forcée au niveau des canaux ouverts des empilages partiels de tôles de stator (8) étoilés ou, dans la variante avec un carter, au niveau des orifices de sortie du carter (16) sur les canaux ouverts des empilages partiels de tôles de stator avec canaux ouverts et fermés.

18. Système de refroidissement pour machines électriques rotatives à très haute utilisation selon la revendication 1,
**caractérisé en ce que**
seul un ventilateur aspirant est agencé au niveau des canaux ouverts des empilages partiels de tôles de stator (8) étoilés ou, dans la variante avec un carter, au niveau des orifices de sortie du carter (16).

19. Système de refroidissement pour machines électriques rotatives à très haute utilisation, avec ou sans carter de machine, avec refroidissement externe ou logé, en particulier pour les machines à courant triphasé avec un empilage de tôles de stator et rotor constitué d'empilages partiels de tôles, les empilages partiels de tôles étant espacés les uns des autres par des segments de guidage et d'écartement,
**caractérisé en ce que**
les empilages partiels de tôles de stator (7, 8) sont agencés à partir de différentes tôles individuelles avec des tronçons de canal ouverts radialement ou fermés radialement (6.1, 6.2), sachant que le système de refroidissement présente des empilages partiels de tôles de stator avec canaux ouverts et fermés (8) et des empilages partiels de tôles de stator avec canaux fermés (7),
lesquels forment des canaux d'entrée (2) et des canaux de sortie (3),
sachant que les canaux d'entrée (2) et les canaux de sortie (3) sont entièrement obturés sur le côté axialement avec des tôles d'extrémité (27),
sachant que les canaux d'entrée (2) et canaux de sortie (3) s'alternent dans le sens circonférentiel au dos de l'empilage de tôles de stator,
si bien que le fluide frigorigène est acheminé uniquement d'un côté de la machine radialement via les tronçons de canal ouverts (6.1) du premier empilage de tôles de stator avec rainures ouvertes et fermées (8),
et que, de l'autre côté, le fluide frigorigène réchauffé est évacué radialement via les tronçons de canal ouverts (6.1) du deuxième empilage partiel de tôles de stator avec rainures ouvertes et fermées (8),
sachant qu'un segment de guidage et d'écartement avec âmes (4) est agencé respectivement entre chaque empilage partiel de tôles de stator (7) et les deux empilages partielsde tôles de stator avec rainures ouvertes et fermées (8),
ce qui entraîne l'apparition de zones de refroidissement radiales (22),
sachant que deux ou plusieurs systèmes de refroidissement partiels indépendants sont formés, pour ce faire deux empilages partiels de tôles de stator avec canaux ouverts et fermés (8) et entre eux au moins un ou un nombre quelconque d'empilages partiels de tôles de stator avec canaux fermés (7) représentent un système de refroidissement partiel,
sachant que les deux empilages partielsde tôles de stator avec canaux ouverts et fermés (8),orientés axialement vers l'intérieur, sont séparés l'un de l'autre uniquement par un élément de paroi intermédiaire (9),
sachant que les systèmes partiels de refroidissement sont agencés déplacés l'un par rapport à l'autre d'un canal d'entrée ou de sortie (2, 3),
et sachant que l'apport de réfrigérant des deux systèmes de refroidissement partiels est réalisé de manière décalée l'un par rapport à l'autre d'un canal d'entrée et de sortie (2, 3),
et sachant que le refroidissement externe est agencé au niveau des deux extrémités des systèmes de refroidissement partiels ou bien que des modules de ventilation sont agencés radialement de manière multiple et répartis sur la longueur de l'empilage de tôles de stator (1).
